# EUROPÄISCHE PATENTSCHRIFT

(11) **EP 3 217 629 B1**
(45) Veröffentlichungstag und Bekanntmachung des Hinweises auf die Patenterteilung: **14.02.2018**
(21) Anmeldenummer: 16159454.4
(22) Anmeldetag: 09.03.2016
(51) Int. Cl.: H04L 29/08, G01D 4/00

(54) **REGISTRIERUNG VON MESSGERÄTEN ÜBER DAS INTERNET**
REGISTRATION OF MEASURING DEVICES OVER THE INTERNET
ENREGISTREMENT DES DISPOSITIFS DE MESURE PAR INTERNET

(43) Veröffentlichungstag der Anmeldung: 13.09.2017
(73) Patentinhaber: VEGA Grieshaber KG, 77709 Wolfach (DE)
(72) Erfinder: HUMMEL, Jakob, 79215 Elzach (DE)
(74) Vertreter: Maiwald Patentanwalts GmbH

(56) Entgegenhaltungen:
- EP-A1- 2 849 142
- EP-A1- 2 901 105
- WO-A1-2013/131546
- DE-A1- 10 142 854
- US-A1- 2015 111 539

## Beschreibung

### Gebiet der Erfindung

Die Erfindung betrifft Füllstand-, Druck- und Durchflussmesssysteme. Insbesondere betrifft die Erfindung ein mobiles Endgerät zur Neuregistrierung eines Füllstandmessgeräts, Druckmessgeräts oder Durchflussmessgeräts bei einem zentralen Server eines Messystems, ein Messsystem mit einem solchen mobilen Endgerät, ein Verfahren zum Erfassen von Füllstandmesswerten, Druckmesswerten oder Durchflussmesswerten in einem Messsystem und zur Neuregistrierung eines Messgeräts in dem Messsystem sowie zur Abfrage von Messdaten durch das mobile Endgerät bei dem zentralen Server, ein Programmelement und ein computerlesbares Medium.

### Hintergrund

Messwerte von Füllstandmessgeräten, Durchflussmessgeräten und Druckmessgeräten können drahtgebunden oder drahtlos an ein mobiles Endgerät übertragen werden, wenn das Messgerät dem mobilen Endgerät eindeutig zugeordnet werden kann. Soll die Messwertübertragung (indirekt) über einen zentralen Server erfolgen, muss sichergestellt sein, dass der Benutzer bzw. das mobile Endgerät auch tatsächlich über die entsprechende Berechtigung verfügt. Dies kann serverseitig erfolgen, indem das Bedienpersonal das mobile Endgerät auf dem Server für diese Datenabfrage freischaltet.

Dokument WO 2013/131546 A1 offenbart eine Vorrichtung und ein Verfahren zur Registrierung eines M2M-Sensors (Machine-to-Machine) und zur Erfassung von Daten mit dem M2M-Sensor. In einem Schritt wird eine Anfrage zum Auslesen von Daten des M2M-Sensors von einem Netzwerkknoten empfangen und an den Sensor weitergeleitet. Als Antwort werden Daten von dem M2M-Sensor ausgelesen und an den Netzwerkknoten übermittelte.

Dokument DE 101 42 854 A1 offenbart ein Verfahren zum Austausch von personen-, lokations- und/oder objektbezogenen Daten, welches genutzt werden kann, um über mobile Kommunikationsmittel mit Datenbanken von Datendiensten Informationen über bestimmte Orte und/oder Objekte auszutauschen. Dabei werden die Örtlichkeiten und Objekte mit einer Kennung verknüpft, unter der die Informationen in der Datenbank gespeichert sind.

Dokument US 2015/01115391 A1 betrifft einen Server zum Verwalten von Haushaltsgeräten. Der Server enthält einen Speicher, ein Kommunikationsmodul zum Austausch von Daten mit einem mobilen Endgerät oder einem Haushaltsgerät, und einem Prozessor, der konfiguriert ist, Login-Informationen von dem mobilen Endgerät zu empfangen.

Dokument EP 2 849 142 A1 betrifft ein Verfahren und ein System zum Warten eines Selbstbedienungsterminals das Warten erfolgt unter Verwendung eines mobilen Endgeräts, wie ein Smartphone. Auf einem Server wird eine Server Anwendung ausgeführt, die einerseits über eine Kommunikationsverbindung und einer auf dem mobilen Endgerät ausgeführten Endgeräteanwendung und andererseits über eine Netzwerkverbindung mit dem Selbstbedienungsterminal kommunizieren kann.

### Zusammenfassung der Erfindung

Es ist eine Aufgabe der Erfindung, die Messgeräteregistrierung und -zuweisung und somit die Messwertabfrage zu vereinfachen.

Diese Aufgabe wird durch die Gegenstände der unabhängigen Patentansprüche gelöst. Weiterbildungen der Erfindung ergeben sich aus den Unteransprüchen und der folgenden Beschreibung.

Ein erster Aspekt der Erfindung betrifft ein mobiles Endgerät zur Neuregistrierung eines Messgeräts in einem Messsystem und ggf. zur Abfrage von Füllstandmessdaten, Druckmessdaten und/oder Durchflussmessdaten des Messgeräts bei einem zentralen Server (durch das mobile Endgerät).

Es ist ein Kommunikationsmodul vorgesehen, welches zur Übermittlung einer Identifikationsnummer (diese kann per Funk vom Messgerät, Optisch mittels Kamera (QR-Code oder OCR-Erkennung der Seriennummer), GPS-Sensor oder Infarot übermittelt werden) und zur Einwahl in den zentralen Server dient. Die Funkkommunikation mit dem Messgerät ist beispielsweise kurzreichweitige Funkkommunikation, wie WLAN oder Bluetooth. Bei dem Messgerät kann es sich insbesondere um ein Füllstandmessgerät, ein Druckmessgerät oder ein Durchflussmessgerät handeln. Die Einwahl in den zentralen Server erfolgt über das Internet.

Das mobile Endgerät weist darüber hinaus einen Prozessor auf, der programmiert und ausgeführt ist, das mobile Endgerät anzuweisen, sich in den zentralen Server über das Internet einzuloggen und eine Identifikationsnummer vom Messgerät entgegenzunehmen. Diese Identifikationsnummer kann beispielsweise beim Messgerät abgefragt werden oder wird in Form eines Broadcast in regelmäßigen Abständen vom Messgerät ausgesendet. Befindet sich der Benutzer in ausreichend geringem Abstand zum Messgerät, kann sein mobiles Endgerät diese Identifikationsnummer empfangen. Der Prozessor kann daraufhin die Identifikationsnummer (und ggf. noch weitere Daten) an den zentralen Server über das Internet übertragen, um das Messgerät dem Kunden (also dem Benutzer des mobilen Endgeräts) zuzuordnen und die Messdaten des Messgeräts an das mobile Endgerät zu übermitteln.

Dies alles kann in einer Ausführungsform vollautomatisch erfolgen. Befindet sich also der Benutzer in ausreichend geringem Abstand zum Messgerät, empfängt sein mobiles Endgerät die Identifikationsnummer und übermittelt diese daraufhin über das Internet an den zentralen Server, der daraufhin die Messdaten (beispielsweise den aktuellen Füllstand) an das mobile Endgerät über das Internet überträgt.

Zunächst werden die anonymen Daten der Messtelle einem Kunden zugeordnet. Bei diesen Daten handelt es sich beispielsweise um ab Werk vergebene messgerätespezifische Daten wie z.B. Seriennummer oder Identifikationsnummer, Gerätebezeichnung, Kalibrierdaten, Firmwareversion oder Gerätezusammenstellung. Die Kunden(Account)-Daten sind im mobilen Gerät gespeichert und die Identifikationsnummer der Messstelle (bzw. des Messgeräts) wird auf dem mobilen Gerät zusammengeführt und automatisch auf den Server z.B. über Funk übertragen und zugewiesen. Hierbei können noch weitere Informationen mit verknüpft werden. Diese Zusatzdaten umfassen z.B. die Lokalisierung (GPS-Daten) oder zusätzliche Messstelleninformationen, wie vom Nutzer eingegebene Kommentare.

Es kann vorgesehen sein, dass der Server von sich aus eine Verifikation vornimmt, ob die an ihn vom mobilen Endgerät übermittelte Identifikationsnummer des Messgeräts tatsächlich ein Messgerät betrifft, das dem Kunden (bzw. dessen mobilem Endgerät) zuzuordnen ist. Ist dies nicht der Fall, werden keine Messdaten an das mobile Endgerät übertragen. Es kann aber auch vorgesehen sein, dass die Messdaten in jedem Fall an das Endgerät übertragen werden, also keine Verifikation stattfindet.

Auch kann vorgesehen sein, dass nur diejenige Identifikationsnummer an den Server übertragen wird, die bisher noch nicht an den Server übertragen wurde, bzw. welche ein Messgerät betrifft, das für das mobile Endgerät noch nicht beim Server registriert ist. Auf diese Weise kann der Datenverkehr zwischen mobile Endgerät und Server reduziert werden.

Bewegt sich also der Kunde beispielsweise durch ein Gebäude, in dem eine Vielzahl an Messgeräten installiert ist, empfängt er, je nach Abstand zu den entsprechenden Messgeräten, eine oder mehrere Identifikationsnummern und das mobile Endgerät überprüft, welche Identifikationsnummer neu ist, also welches Messgerät noch nicht registriert ist. Diese neue Nummer wird dann an den Server übertragen und der Server schickt dem mobilen Endgerät die entsprechenden Messdaten.

Zusätzlich zu der Identifikationsnummer kann das mobile Endgerät auch seine aktuelle Position (Standort) an den zentralen Server über das Internet übertragen. Hierfür weist das mobile Endgerät beispielsweise eine Positionsermittlungseinheit auf, die die Position des mobilen Endgeräts ermittelt. Diese Ermittlung kann getriggert werden, wenn das mobile Endgerät eine Identifikationsnummer vom Messgerät erhalten hat.

Gemäß einer weiteren Ausführungsform ist vorgesehen, dass das mobile Endgerät im oben geschilderten Falle Benutzeraccountinformationen von einem internen Datenspeicher abfragt, welche ein Einloggen des Benutzers (bzw. des mobilen Endgeräts) in den zentralen Server ermöglichen und dem Benutzer klar zuzuordnen sind und ihn identifizieren. Diese Benutzeraccountinformationen können zusammen mit der Identifikationsnummer und ggf. zusammen mit den Positionsdaten des mobilen Endgeräts an den zentralen Server über das Internet übertragen werden, um das Messgerät dem Kunden zuzuordnen und die Messdaten des Messgeräts an das mobile Endgerät zu übermitteln.

Die Messdatenübermittlung vom Server an das Endgerät kann nur dann erfolgen, wenn der Kunde (bzw. das mobile Endgerät) auch tatsächlich im Server eingeloggt ist.

Gemäß einer weiteren Ausführungsform der Erfindung ist der Prozessor ausgeführt, das mobile Endgerät anzuweisen, ein Anfragesignal an das Messgerät zu senden und als Antwort auf das Anfragesignal die Identifikationsnummer des Messgeräts entgegenzunehmen.

In diesem Falle wird also die Übermittlung der Identifikationsnummer vom Messgerät an das mobile Endgerät durch das mobile Endgerät getriggert. Auch kann vorgesehen sein, dass die Identifikationsnummer über einen anderen Weg beim mobilen Endgerät eingeht, z. B. indem ein Barcode oder ein QR-Code vom mobilen Endgerät gescannt wird, der sich am Messgerät oder an der Einrichtung, in welcher das Messgerät seine Messung vornimmt, befindet. Bei dieser Einrichtung handelt es sich beispielsweise um einen Tank oder eine Rohrleitung.

Die Positionsbestimmung kann beispielsweise über GPS erfolgen, aber auch über Mobilfunkantennen oder die Identifikation des nächstgelegenen WLAN-Senders.

Die Identifikation des Benutzers im Server kann über die Übermittlung von Accountinformationen erfolgen (beispielsweise Benutzername und Passwort), aber auch über einen Token in Form einer einmaligen Identifikation. Es kann auch vorgesehen sein, dass die Tokenidentifikation nachträglich erfolgtEin Token kann als alternative zum Account verwendet werden. Die Verbindung wird z.B. in folgenden Schritten aufgebaut:
1. Mobiles Gerät verbindet sich mit einem Sicherheitsserver.
2. Sicherheitsserver sendet einen Token (https://de.wikipedia.org/wiki/OAuth) an das mobile Gerät.
3. Das Mobile Gerät oder das Messgerät sendet die Geräteidentifikation mit dem Token an den Zentralen Messdatenserver.

Anhand des Token kann die Identifikation erfolgen, wer die Information gesendet hat.

Auch kann vorgesehen sein, dass die Benutzeridentifikation vom zentralen Server oder vom Auswertegerät des Messgeräts initiiert wird.

Insbesondere kann das mobile Endgerät eine Benutzerschnittstelle zum Triggern der Übertragung der Identifikationsnummer an den zentralen Server aufweisen. Beispielsweise erhält das Endgerät die Identifikationsnummer vom Messgerät und der Benutzer kann daraufhin entscheiden, ob diese Identifikationsnummer auch tatsächlich an den Server übertragen wird, um eine Messwertübertragung vom Server an das Endgerät auszulösen.

Auch kann vorgesehen sein, dass der Benutzer, beispielsweise bevor er die Halle betritt, über die Schnittstelle entscheidet, welche Messgeräte von Interesse sind, mit anderen Worten, welche Identifikationsnummern tatsächlich an den Server zu übertragen sind. Dies kann vorteilhaft sein, wenn sich in der Halle eine hohe Anzahl an Messgeräten befindet, der Benutzer aber nur die Messdaten von ganz bestimmten Messgeräten abfragen bzw. übermittelt bekommen möchte.

Ein weiterer Aspekt der Erfindung betrifft ein Messsystem zum Erfassen von Füllstandmesswerten, Druckmesswerten oder Durchflussmesswerten, welches ein oder mehrere oben und im Folgenden beschriebenen Endgeräte aufweist. Darüber hinaus weist das Messsystem mindestens ein Messgerät auf, bei dem es sich um ein Füllstandmessgerät, ein Druckmessgerät oder ein Durchflussmessgerät handelt. Darüber hinaus ist ein zentraler Server vorgesehen, der die im Folgenden beschriebenen serverseitigen Verfahrensschritte durchführen kann.

Beispielsweise ist der zentrale Server ausgeführt zu überprüfen, ob die von dem mobilen Endgerät übermittelte Identifikationsnummer ein Messgerät betrifft, das dem Kunden eindeutig zuzuordnen ist. Der Server kann ausgeführt sein, den Messwert dieses Messgeräts nur dann an das mobile Endgerät zu übermitteln, wenn die Überprüfung erfolgreich verlaufen ist, wenn also eine eindeutige Zuordnung erfolgt ist. Andernfalls wird ein Messwert nicht übertragen.

Ein weiterer Aspekt der Erfindung betrifft ein Verfahren zum Erfassen von Füllstandmesswerten, Druckmesswerten oder Durchflussmesswerten in einem Messgsystem, zur Neuregistrierung eines Messgeräts in dem Messsystem und zur Abfrage von Füllstandmessdaten, Druckmessdaten und/oder Durchflussmessdaten des Messgeräts bei einem zentralen Server.

Zunächst wird das mobile Endgerät in den zentralen Server über das Internet eingeloggt. Davor, gleichzeitig oder danach erfolgt eine Übermittlung einer Messgeräteidentifikationsnummer vom Messgerät an das mobile Endgerät. Diese Übermittlung kann endgeräteseitig getriggert sein oder per Broadcast erfolgen.

Die Identifikationsnummer wird dann vom mobilen Endgerät an den zentralen Server über das Internet übermittelt und der Server ordnet das Messgerät dem mobilen Endgerät zu, woraufhin er Messdaten des Messgeräts an das mobile Endgerät übermittelt.

Ein weiterer Aspekt der Erfindung betrifft ein Programmelement, das, wenn es auf einem Prozessor eines mobilen Endgeräts ausgeführt wird, das Endgerät veranlasst, sich in den zentralen Server über das Internet einzuloggen, eine Identifikationsnummer eines Messgeräts vom Messgerät entgegenzunehmen, diese Identifikationsnummer an den zentralen Server über das Internet zu übermitteln und daraufhin vom zentralen Server Messdaten des Messgeräts zu empfangen und ggf. anzuzeigen.

Ein weiterer Aspekt der Erfindung betrifft ein computerlesbares Medium, auf dem ein oben beschriebenes Programmelement gespeichert ist.

Das Programmelement kann Teil einer Software sein, die auf dem Prozessor des mobilen Endgeräts gespeichert ist. Auch kann es sich bei dem Programmelement um ein Programm handeln, welches ein bereits bestehendes Programmelement durch eine Aktualisierung (Update) zur Verwendung der Erfindung veranlasst.

Im Folgenden werden mit Verweis auf die Figuren Ausführungsbeispiele der Erfindung beschrieben.

### Kurze Beschreibung der Figuren

Fig. 1 zeigt ein Messsystem gemäß einem Ausführungsbeispiel der Erfindung.
Fig. 2 zeigt ein Flussdiagramm eines Verfahrens gemäß einem Ausführungsbeispiel der Erfindung.

### Detaillierte Beschreibung von Ausführungsbeispielen

Die Darstellungen in den Figuren sind schematisch und nicht maßstäblich.

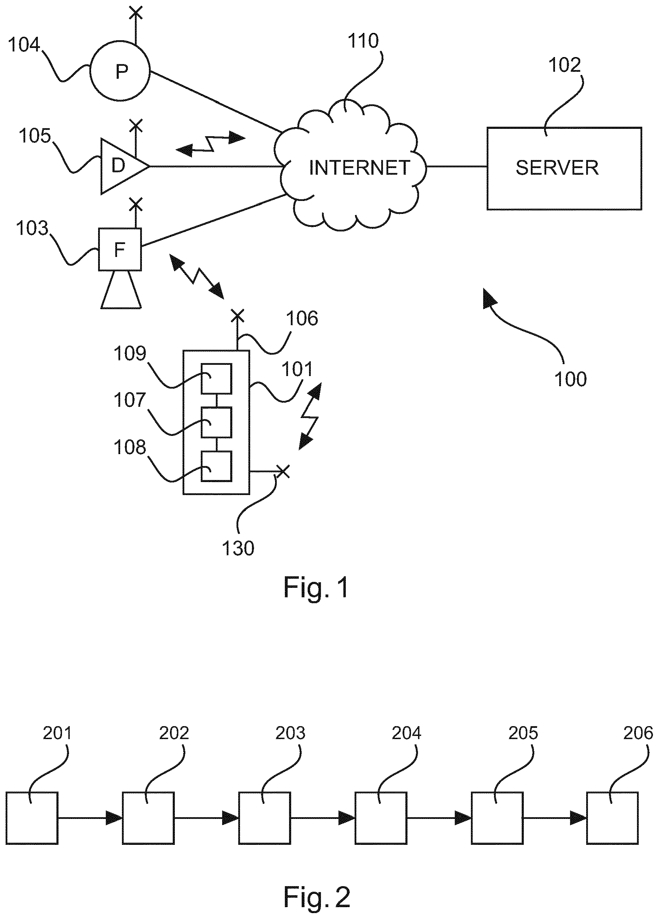

Fig. 1 zeigt ein Messsystem 100, welches ein mobiles Endgerät 101, einen zentralen Server 102, beispielsweise in Form eines VEGA Inventory Systems, und eine Vielzahl an Messgeräten 103, 104, 105 aufweist.

Bei den Messgeräten handelt es sich beispielsweise um eines oder mehrere Füllstandmessgeräte 103, um eines oder mehrere Durchflussmessgeräte 105 und um eines oder mehrere Druckmessgeräte 104.

Die Messgeräte weisen eine Kommunikationseinrichtung zur Funkkommunikation mit dem mobilen Endgerät 101 auf. Hierbei handelt es sich beispielsweise um Nahbereichskommunikation wie WLAN, Bluetooth oder RFID. Im lwetzter Fall kann ein entsprechender RFID-Chip an dem Behälter, dessen Füllstand vom Messgerät gemessen wird, oder am Messgerät selber angebracht sein. Darüber hinaus sind die Messgeräte 103, 104, 105 mit dem Internet 110 verbunden. Diese Verbindung kann drahtgebunden und/oder drahtlos vorgesehen sein. Auch der Server 102 ist mit dem Internet verbunden, ebenso das mobile Endgerät 101. Insbesondere kann die Einwahl in den zentralen Server über das Internet erfolgen. Hierfür kann das mobile Endgerät eine separate Antenne 130 aufweisen.

Bei dem mobilen Endgerät handelt es sich beispielsweise um ein Smartphone, ein Tablet oder einen mobilen Computer. Das mobile Endgerät 101 weist eine Anzeigeeinrichtung 109, ein Kommunikationsmodul 106, einen Prozessor 107 und einen Datenspeicher 108 auf. Der Prozessor kann auf den Datenspeicher 108 zugreifen und Anzeigedaten an die Anzeigeeinrichtung 109 übermitteln sowie die von dem Kommunikationsmodul 106 empfangenen Daten entgegennehmen bzw. auszusendende Daten an das Kommunikationsmodul 106 übertragen.

Die Messgeräte können entsprechende Auswertegeräte aufweisen, welche die Messdaten (Füllstanddaten, Druckdaten, Durchflussdaten) über das Internet an den zentralen Server 102, beispielsweise in Form eines sogenannten VEGA Inventory Systems, übertragen.

Um die Messstellen eines solchen Auswertegeräts im Internetportal sichtbar zu machen, überträgt das mobile Endgerät 101 die Seriennummer des entsprechenden Messgeräts an den Server, der daraufhin das Messgerät mit dem mobilen Endgerät verknüpft bzw. die beiden Geräte einander zuordnet.

Auf dem mobilen Endgerät kann beispielsweise eine "App" gespeichert sein, welche es dem Benutzer erleichtert, sich auf den zentralen Server einzuloggen. Ist dieses Einloggen geschehen, nutzt das mobile Endgerät 101 sein Kommunikationsmodul, beispielsweise ein Bluetoothmodul oder WLAN-Modul, um die Seriennummer des Messgeräts bzw. Auswertegeräts zu empfangen. Im gleichen Zuge ermittelt das mobile Endgerät seine aktuelle Position, beispielsweise über GPS. Die Benutzeraccountinformation, die empfangene Seriennummer des Messgeräts und ggf. die Position des mobilen Endgeräts werden dann an den Server übermittelt und im Server dem Kunden zugeordnet. Er kann dann die Messdaten und ggf. auch weitere Sensordaten des entsprechenden Messgeräts unmittelbar einsehen.

Die Darstellung der Messdaten auf dem mobilen Endgerät kann beispielsweise Informationen hinsichtlich der Position des Messgeräts umfassen. Beispielsweise kann ein Lageplan dargestellt werden, welcher die unterschiedlichen Messgerätepositionen oder Lagertanks zeigt und die Messdaten (beispielsweise die Füllstanddaten) können direkt auf dem entsprechenden Tank angezeigt werden. Dies erleichtert die Zuordnung der Messdaten zur entsprechenden Messstelle (in diesem Falle ein Lagertank).

Auch kann vorgesehen sein, dass nur diejenigen Messdaten angezeigt werden, welche von denjenigem Messgerät stammen, in dessen unmittelbarer Nähe sich der Kunde befindet, also welches am nächsten zum Kunden angeordnet ist. Die Entscheidung, welches Messgerät sich am nächsten am mobilen Endgerät befindet, kann beispielsweise durch das mobile Endgerät getroffen werden, indem die Signalstärken der Signale, mit welchen die Messgeräte ihre Identifikationsnummern an das mobile Endgerät übermitteln, miteinander verglichen werden. Alternativ oder zusätzlich kann vorgesehen sein, dass das mobile Endgerät eine digitale Karte aufweist, auf welcher die Positionen der entsprechenden Messgeräte hinterlegt sind, sodass das mobile Endgerät eine Identifikationsnummer einem Messgerätestandort zuordnen kann und dann im Vergleich mit dem eigenen, gemessenen Standort entscheiden kann, welches Messgerät sich am nächsten am mobilen Endgerät befindet. Diese Daten werden dann angezeigt.

Fig. 2 zeigt ein Flussdiagramm eines Verfahrens, bei dem in Schritt 201 ein Einloggen des mobilen Endgeräts im zentralen Server erfolgt. Der zentrale Server weiß dann, um welchen Benutzer es sich handelt und ggf. auch, welche Messgeräte diesem Benutzer zuzuordnen sind. In Schritt 202 erfolgt die Übermittlung mehrerer Identifikationsnummern mehrerer Messgeräte an das mobile Endgerät. In Schritt 203 entscheidet der Benutzer des mobilen Endgeräts, welche Identifikationsnummern, also welche Messgeräte, Messwerte liefern sollen. Diese ausgewählten Identifikationsnummern werden dann in Schritt 204 an den zentralen Server übertragen, welcher ggf. in Schritt 205 verifiziert, ob diese Messgeräte auch tatsächlich dem Kunden zuzuordnen sind. In Schritt 206 sendet er dann, ggf. nach erfolgreicher Verifikation, die entsprechenden, vom Kunden gewünschten Messwerte an das mobile Endgerät.

Der Kunde ist also mithilfe einer App mit seinem Account auf seinem Smartphone/Tablet/mobilem Computer im VEGA Inventory System eingeloggt. Er nutzt sein Bluetooth- oder WLAN-Modul, um die Seriennummer des Messgeräts zu empfangen. Im gleichen Zuge wird seine Position über GPS ermittelt. Accountinformation, Seriennummer und ggf. Position werden an den Server übermittelt und dem Kunden zugeordnet. Er kann dann seine Sensordaten unmittelbar einsehen.

Ergänzend sei daraufhingewiesen, dass "umfassend" und "aufweisend" keine anderen Elemente oder Schritte ausschließt und die unbestimmten Artikel "eine" oder "ein" keine Vielzahl ausschließen. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Mobiles Endgerät (101) zur Neuregistrierung eines Messgeräts in einem Messsystem (100), aufweisend:
ein Kommunikationsmodul (106) zur Übermittlung einer Identifikationsnummer des Messgerätes, bei dem es sich um ein Füllstandmessgerät (103), ein Druckmessgerät (104), ein Durchflussmessgerät oder Dichtemessgerät (105) handelt, und zur Einwahl in einen zentralen Server über das Internet;
einen Prozessor (107), der ausgeführt ist, das mobile Endgerät anzuweisen:
- sich in den zentralen Server über das Internet einzuloggen;
- eine Identifikationsnummer vom Messgerät entgegenzunehmen;
- die Identifikationsnummer an den zentralen Sever über das Internet zu übertragen, so dass der zentrale Server das Messgerät registriert und mit dem mobilen Endgerät verknüpft; und
wobei das mobile Endgerät (101) zur Abfrage von Füllstandmessdaten, Druckmessdaten oder Durchflussmessdaten des Messgeräts bei dem zentralen Server (102) ausgeführt ist.

2. Mobiles Endgerät (101) nach Anspruch 1, weiter aufweisend:
eine Positionsermittlungseinheit (109);
wobei der Prozessor (107) ausgeführt ist,
- die Positionsermittlungseinheit anzuweisen, die Position des mobilen Endgeräts zu ermitteln, wenn ein Anfragesignal an das Messgerät gesendet wird oder wenn das mobile Endgerät eine Identifikationsnummer vom Messgerät empfangen hat; und
- die Position des mobilen Endgeräts zusammen mit der Identifikationsnummer an den zentralen Sever über das Internet zu übertragen, um das Messgerät mit dem mobilen Endgerät zu verknüpfen und die Messdaten des Messgeräts an das mobile Endgerät zu übermitteln.

3. Mobiles Endgerät (101) nach Anspruch 1 oder 2, weiter aufweisend:
einen Datenspeicher (108);
wobei der Prozessor (107) ausgeführt ist,
- Benutzeraccountinformationen zum Einloggen des mobilen Endgerätes in den zentralen Server vom Datenspeicher abzufragen;
- die Benutzeraccountinformationen und die Identifikationsnummer an den zentralen Sever über das Internet zu übertragen, um das Messgerät mit dem mobilen Endgerät zu verknüpfen und die Messdaten des Messgeräts an das mobile Endgerät zu übermitteln.

4. Mobiles Endgerät (101) nach einem der vorhergehenden Ansprüche, wobei der Prozessor (107) ausgeführt ist, das mobile Endgerät anzuweisen:
- ein Anfragesignal an das Messgerät zu senden;
- als Antwort auf das Anfragesignal die Identifikationsnummer des Messgeräts entgegenzunehmen.

5. Mobiles Endgerät (101) nach einem der vorhergehenden Ansprüche, wobei das Kommunikationsmodul (106) zur Nahbereichskommunikation mit dem Messgerät ausgeführt ist.

6. Mobiles Endgerät (101) nach einem der vorhergehenden Ansprüche, weiter aufweisend:
eine Benutzerschnittstelle zum Triggern der Übertragung der Identifikationsnummer an den zentralen Sever.

7. Mobiles Endgerät (101) nach einem der vorhergehenden Ansprüche, weiter aufweisend:
eine Anzeigeeinrichtung (109) zur Darstellung eines Messwertes, der vom Messgerät erfasst worden ist, daraufhin an den zentralen Server (102) übermittelt worden ist und dann nach Übermittlung der Identifikationsnummer an den zentralen Server von diesem an das mobile Endgerät übertragen worden ist.

8. Messsystem (100) zum Erfassen von Füllstandmesswerten, Druckmesswerten oder Durchflussmesswerten, aufweisend:
ein mobiles Endgerät (101) nach einem der vorhergehenden Ansprüche;
mindestens ein Messgerät, bei dem es sich um ein Füllstandmessgerät (103), ein Druckmessgerät (104) oder ein Durchflussmessgerät (105) handelt;
einen zentralen Server (102).

9. Messsystem (100) nach Anspruch 8,
wobei der zentrale Server (102) ausgeführt ist, den Messwert an das mobile Endgerät zu übermitteln.

10. Messsystem (100) nach Anspruch 8,
wobei der zentrale Server (102) ausgeführt ist zu überprüfen, ob die von dem mobilen Endgerät übermittelte Identifikationsnummer ein Messgerät betrifft, das dem Kunden zuzuordnen ist;
wobei der zentrale Server (102) ausgeführt ist, den Messwert nur dann an das mobile Endgerät zu übermitteln, wenn die Überprüfung erfolgreich verlaufen ist.

11. Verfahren zum Erfassen von Füllstandmesswerten, Druckmesswerten, Durchflussmesswerten oder Dichtemesswerten in einem Messsystem (100) und zur Neuregistrierung eines Messgeräts in dem Messsystem (100), das Verfahren aufweisend die Schritte:
Einloggen eines mobilen Endgeräts (101) in einen zentralen Server (102) über das Internet;
Übermitteln einer Identifikationsnummer eines Messgeräts (103, 104, 105) vom Messgerät an das mobile Endgerät;
Übermitteln der Identifikationsnummer an den zentralen Sever über das Internet;
Verknüpfen des Messgeräts mit dem mobilen Endgerät durch den Server.

12. Programmelement, das, wenn es auf dem Prozessor (107) eines mobilen Endgeräts ausgeführt wird, das Endgerät veranlasst, die folgenden Schritte durchzuführen:
Einloggen eines mobilen Endgeräts (101) in einen zentralen Server (102) über das Internet;
Entgegennehmen eine Identifikationsnummer eines Messgeräts (103, 104, 105) vom Messgerät, wobei es sich bei dem Messgerät (103, 104, 105) um ein Füllstandmessgerät (103), ein Druckmessgerät (104), ein Durchflussmessgerät oder Dichtemessgerät (105) handelt; und
Übermitteln der Identifikationsnummer an den zentralen Sever über das Internet, um so den zentralen Server zu veranlassen, das Messgerät zu registrieren und mit dem mobilen Endgerät zu verknüpfen.

13. Computerlesbares Medium, auf dem ein Programmelement nach Anspruch 12 gespeichert ist.

## Claims

1. A mobile device (101) for re-registering a measurement device in a measuring system (100), comprising:
a communication module (106) for transmitting an identification number of the measurement device, which is a level meter (103), a pressure gauge (104), a flow meter or a density meter (105), and for connecting to a central server via the Internet;
a processor (107) configured to instruct the mobile device to:
- log into the central server via the Internet;
- receive an identification number from the measurement device;
- transmit the identification number to the central server via the Internet, so that the central server registers the measurement device and assigns the measurement device to the mobile device; and
wherein the mobile device is configured to query level measurement data, pressure measurement data or flow measurement data of the measurement device at the central server (102).

2. The mobile device (101) of claim 1, further comprising:
a position detection unit (109);
wherein the processor (107) is configured to:
- instruct the position detection unit to determine the position of the mobile device when a request signal is sent to the measurement device or when the mobile device has received an identification number from the measurement device; and
- transmit the position of the mobile device together with the identification number to the central server via the Internet to assign the measurement device to the mobile device and to transmit the measurement data of the measurement device to the mobile device.

3. The mobile device (101) of claim 1 or 2, further comprising:
a data storage (108);
wherein the processor (107) is configured to:
- retrieve user account information for logging into the central server from the data storage;
- to transmit the user account information and the identification number to the central server via the Internet, to assign the measurement device to the mobile device and to transmit the measurement data of the measurement device to the mobile device.

4. The mobile device (101) according to any of the preceding claims, wherein the processor (107) is configured to instruct the mobile device to:
- send a request signal to the measurement device;
- receive the identification number of the measurement device in response to the request signal.

5. The mobile device (101) according to any of the preceding claims, wherein the communication module (106) is configured for short-range communication with the measurement device.

6. The mobile device (101) of any one of the preceding claims, further comprising:
a user interface for triggering the transmission of the identification number to the central server.

7. The mobile device (101) according to any one of the preceding claims, further comprising:
a display device (109) for displaying a measurement value, which has been detected by the measurement device, has then been transmitted to the central server (102) and then after transmission of the identification number to the central server has been transmitted from the central server to the mobile device.

8. A measuring system (100) for detecting level readings, pressure readings or flow readings, comprising:
a mobile device (101) according to any one of the preceding claims;
at least one measurement device, which is a level gauge (103), a pressure gauge (104) or a flow meter (105);
a central server (102).

9. Measuring system (100) according to claim 8, wherein the central server (102) is configured to transmit a measurement value to the mobile device.

10. The measuring system (100) of claim 8,
wherein the central server (102) is configured to verify if the identification number transmitted by the mobile device relates to a measurement device to be assigned to a customer;
wherein the central server (102) is configured to transmit the measurement value to the mobile device only if the verification has been successful.

11. A method for detecting level readings, pressure readings, flow readings or density readings in a measuring system (100) and for re-registering a measurement device in the measuring system (100), the method comprising the steps of:
logging a mobile device (101) into a central server (102) via the Internet;
transmitting an identification number of a measurement device (103, 104, 105) from the measurement device to the mobile device;
transmitting the identification number to the central server via the Internet;
assigning the measurement device to the mobile device via the server.

12. A program element that, when executed on a processor (107) of a mobile device, causes the mobile device to perform the following steps:
logging the mobile device (101) into a central server (102) via the Internet;
accepting an identification number of a measurement device (103, 104, 105) from the measurement device; wherein the measurement device is a level meter (103), a pressure gauge (104), a flow meter or a density meter (105); and
transmitting the identification number to the central server via the Internet, so that the central server is caused to register the measurement device and assign the measurement device to the mobile device.

13. A computer-readable medium on which a program element according to claim 12 is stored.

## Revendications

1. Terminal mobile (101) pour le nouvel enregistrement d'un appareil de mesure dans un système de mesure (100), comprenant :
un module de communication (106) pour la transmission d'un numéro d'identification de l'appareil de mesure, qui est un appareil de mesure de niveau (103), un appareil de mesure de pression (104), un appareil de mesure de débit ou un appareil de mesure de densité (105), et pour l'entrée en communication dans un serveur central à travers l'Internet ;
un processeur (107), réalisé pour donner l'ordre au terminal mobile :
- d'accéder au serveur central à travers l'Internet ;
- d'accepter un numéro d'identification de l'appareil de mesure ;
- de transmettre le numéro d'identification au serveur central à travers l'Internet, de sorte que le serveur central enregistre l'appareil de mesure et l'associe au terminal mobile ; et
le terminal mobile (101) étant réalisé pour l'interrogation de données de mesure de niveau, de données de mesure de pression ou de données de mesure de débit de l'appareil de mesure auprès du serveur central (102).

2. Terminal mobile (101) selon la revendication 1, comprenant en outre :
une unité de détermination de position (109) ;
le processeur (107) étant réalisé,
- pour donner l'ordre à l'unité de détermination de position de déterminer la position du terminal mobile, lorsqu'un signal d'interrogation est envoyé à l'appareil de mesure ou lorsque le terminal mobile a reçu un numéro d'identification de l'appareil de mesure ; et
- pour transmettre au serveur central, à travers l'Internet, la position du terminal mobile avec le numéro d'identification, afin d'associer l'appareil de mesure au terminal mobile et de transmettre les données de l'appareil de mesure au terminal mobile.

3. Terminal mobile (101) selon la revendication 1 ou 2, comprenant en outre :
une mémoire de données (108) ;
le processeur (107) étant réalisé,
- pour demander des informations de compte d'utilisateur depuis la mémoire de données pour l'accession du terminal mobile au serveur central;
- pour transmettre les informations de comptes d'utilisateurs et le numéro d'identification au serveur central à travers l'Internet, afin d'associer l'appareil de mesure au terminal mobile et de transmettre les données de l'appareil de mesure au terminal mobile.

4. Terminal mobile (101) selon l'une des revendications précédentes, le processeur (107) étant réalisé pour donner l'ordre au terminal mobile :
- d'émettre un signal d'interrogation à l'appareil de mesure ;
- de recevoir le numéro d'identification de l'appareil de mesure en tant que réponse au signal d'interrogation.

5. Terminal mobile (101) selon l'une des revendications précédentes, le module de communication (106) étant réalisé pour la communication locale avec l'appareil de mesure.

6. Terminal mobile (101) selon l'une des revendications précédentes, comprenant en outre :
une interface utilisateur pour le déclenchement de la transmission du numéro d'identification au serveur central.

7. Terminal mobile (101) selon l'une des revendications précédentes, comprenant en outre :
un dispositif d'affichage (109) pour la représentation d'une valeur de mesure, laquelle a été détectée par l'appareil de mesure, puis transmise au serveur central (102), et ensuite transmise au terminal mobile par le serveur après la transmission du numéro d'identification au serveur central.

8. Système de mesure (100) pour la détection de valeurs de mesure de niveau, de valeurs de mesure de pression ou de valeurs de mesure de débit, comprenant :
un terminal mobile (101) selon l'une des revendications précédentes ;
au moins un appareil de mesure, qui est un appareil de mesure de niveau (103), un appareil de mesure de pression (104) ou un appareil de mesure de débit (105) ;
un serveur central (102).

9. Système de mesure (100) selon la revendication 8,
le serveur central (102) étant réalisé pour transmettre la valeur de mesure au terminal mobile.

10. Système de mesure (100) selon la revendication 8,
le serveur central (102) étant réalisé pour vérifier si le numéro d'identification, transmis par le terminal mobile, concerne un appareil de mesure à associer au client ;
le serveur central (102) étant réalisé pour ne transmettre la valeur de mesure au terminal mobile que lorsque la vérification s'est déroulée avec succès.

11. Procédé destiné à la détection de valeurs de mesure de niveau, de valeurs de mesure de pression, de valeurs de mesure de débit ou de valeurs de mesure de densité dans un système de mesure (100), et au nouvel enregistrement d'un appareil de mesure dans le système de mesure (100), le procédé comprenant les étapes :
accession d'un terminal mobile (101) à un serveur central (102) à travers l'Internet ;
transmission au terminal mobile d'un numéro d'identification d'un appareil de mesure (103, 104, 105) depuis l'appareil de mesure ;
transmission du numéro d'identification au serveur central à travers l'Internet ;
association de l'appareil de mesure au terminal mobile par le serveur.

12. Elément de programme qui, lorsqu'il est exécuté sur le processeur (107) d'un terminal mobile, donne l'ordre au terminal mobile de mettre en oeuvre les étapes suivantes :
accession d'un terminal mobile (101) à un serveur central (102) à travers l'Internet ;
réception d'un numéro d'identification d'un appareil de mesure (103, 104, 105) depuis l'appareil de mesure, l'appareil de mesure (103, 104, 105) étant un appareil de mesure de niveau (103), un appareil de mesure de pression (104), un appareil de mesure de débit ou un appareil de mesure de densité (105) ; et
transmission du numéro d'identification au serveur central à travers l'Internet, pour ainsi donner l'ordre au serveur central d'enregistrer l'appareil de mesure et de l'associer au terminal mobile.

13. Support lisible par ordinateur, sur lequel est mémorisé un élément de programme selon la revendication 12.
